# EUROPEAN PATENT SPECIFICATION

(11) **EP 2 177 809 B1**
(45) Date of publication and mention of the grant of the patent: **14.03.2012**
(21) Application number: 08017994.8
(22) Date of filing: 14.10.2008
(51) Int. Cl.: F16L 37/40, F02M 55/02, F02M 61/16

(54) **Fluid injector with relief valve**
Flüssigkeitseinspritzdüse mit Entlastungsventil
Injecteur de fluide avec soupape de décharge

(43) Date of publication of application: 21.04.2010
(73) Proprietor: Continental Automotive GmbH, 30165 Hannover (DE)
(72) Inventor: Delfrate, Licia, 55050 Lucca (IT); Ricci, Roberto, 57121 Livorno (IT)

(56) References cited:
- EP-A- 1 589 219
- US-A- 4 962 881
- US-A- 5 082 244
- US-A- 6 089 540
- US-A1- 2001 050 073

## Description

The invention relates to a fluid injector, according to the preamble of claim 1.

A respective fluid injector is disclosed in US-A 6,089,540.

Fluid injectors are in widespread use, for example as fuel injectors in internal combustion engines. Fuel injectors in internal combustion engines are coupled via a fluid inlet with a fluid reservoir providing fuel under high pressure and via a fluid outlet being coupled to a combustion chamber. For maintenance or repair purposes the fuel injector may be hydraulically and mechanically uncoupled from the fluid reservoir, for example by a service technician person.

The object of the invention is to create a fluid injector comprising a reliable relief valve with a long durability.

The object is achieved by the features of the independent claim. An advantageous embodiment of the invention is given in the sub claim.

An advantage of the invention is that the hydraulic connection is enabled/disabled by a mechanical connection/disconnection, respectively. This enables a reliable relief valve in which a movement of mechanical components only takes place during a connection/disconnection of the relief valve. This reduces abrasion in the relief valve and extends the durability. It enables a simple establishment of the hydraulic connection between the fluid pipe connector and the fluid injector upon a mechanical connection of the fluid pipe connector to the fluid injector.

In an advantageous embodiment, the fluid inlet comprises a spherical or conical shape being designed to be in a conical/spherical or in a spherical/conical mechanical engagement with the fluid pipe connector. This enables a simple and reliable mechanical and hydraulical connection between the fluid rail and the fluid injector.

The invention reduces in particular a leakage of fluid through the fluid inlet when the fluid injector is disconnected from the fluid pipe connector, for example by a service technician person. During an operation of the fluid injector, there are no moveable parts in the relief valve and as a result there is less abrasion. This enables a reliable fluid injector with a long durability. The fluid may, for example, be fuel. The fluid injector may be designed as a fuel injector for use in an internal combustion engine.

Exemplary embodiments of the invention are explained in the following with the aid of schematic drawings. These are as follows:
- Figure 1: a cross-section through a fluid injector according to the invention and a fluid pipe connector, in- cluding a first embodiment of the relief valve,
- Figure 2: a cross-section through the first embodiment of the relief valve,
- Figure 3: a spring element, a sealing element and a piston of the first embodiment of the relief valve,
- Figure 4: a cross-section through the first embodiment of the relief valve with the fluid pipe connector coupled to the relief valve,
- Figure 5: a cross-section through the first embodiment of the relief valve with the fluid pipe connector coupled to the relief valve,
- Figure 6: a cross-section through a second embodiment of the relief valve with the fluid pipe connector coupled to the relief valve,
- Figure 7: a perspective view of the second embodiment of the relief valve with the fluid pipe connector coupled to the relief valve.

Elements of the same design or function that occur in different illustrations are identified by the same reference signs.

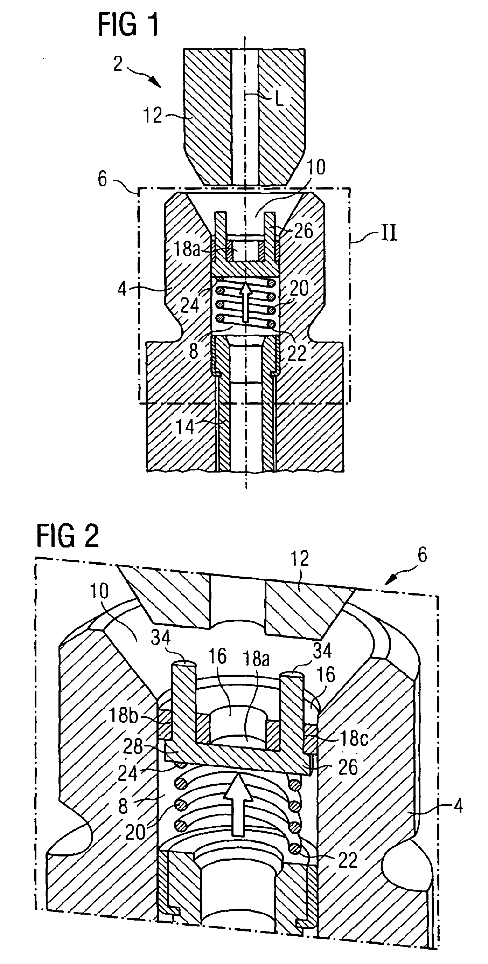

Figure 1 shows a first embodiment in a cross-sectional view through a fluid injector 2 comprising a housing 4 and a relief valve 6 which is arranged in a cavity 8 having a longitudinal axis L. At its free axial end the cavity 8 comprises a fluid inlet 10 being designed to receive a fluid pipe connector 12. In a preferred embodiment, there is a fluid filter 14 arranged in the cavity 8.

The fluid injector 2 may be designed as a fuel injector in order to be used to inject fuel into a combustion chamber of an internal combustion engine. The fluid pipe connector 12 may be for example part of a fuel rail, being designed to deliver fuel to the fluid injector 2.

The relief valve 6 comprises a sealing element 16 having three recesses 18a, 18b, 18c, a spring element 20 with a first axial end 22 and a second axial end 24 and a piston 26. The sealing element 16 is arranged in the cavity 8 such that a hydraulic communication in the cavity 8 is possible at least through the recess 18a. The sealing element 16 may for example be press fitted into the cavity 8.

The first axial end 22 of the spring element 20 is fixed in relation to the housing 4. The second axial end 24 of the spring element 20 is arranged moveable in the cavity 8 facing the fluid inlet 10. The piston 26 is arranged in the cavity 8 and coupled to the second axial end 24 of the spring element 20 in order to face the fluid inlet 10.

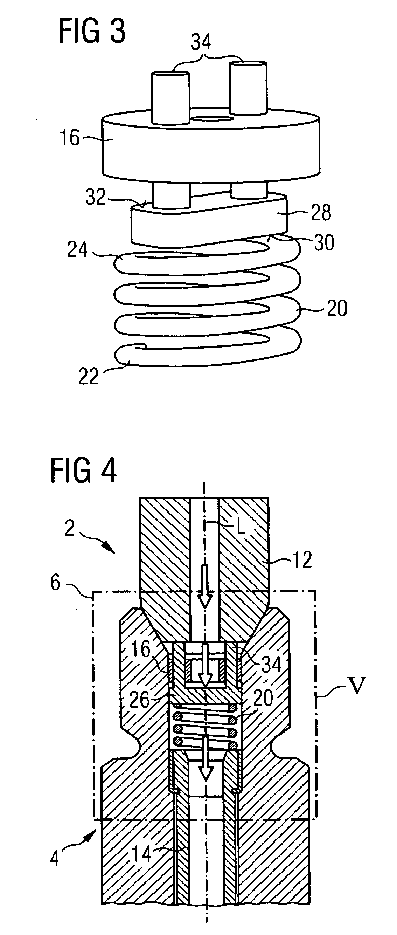

Figure 2 and Figure 3 show the first embodiment of the relief valve 6 in more detail. The sealing element 16 comprises the three recesses 18a,18b,18c. The piston 26 comprises a closing element 28 having a first side 30 and an opposite second side 32. The closing element 28 of the piston 26 is mechanically coupled to the second axial end 24 of the spring element 20. The piston 26 further comprises two contact elements 34 which are mechanically coupled to the first side 30 of the closing element 28. Each of the contact elements 34 extends through one recess 18b and 18c of the sealing element 16, respectively.

In Figure 2 the fluid pipe connector 12 is not coupled to the fluid injector 2 so that the contact elements 34 extend into the fluid inlet 10. Due to the pretension of the spring element 20 the piston 26 is pressed against the sealing element 16 such that the closing element 28 of the piston 26 hydraulically seals the recesses 18a, 18b and 18c of the sealing element 16. A hydraulical communication between the fluid inlet 10 and the fluid filter 14 is prevented by the hydraulically sealing engagement between the piston 26 and the sealing element 16.

If the fluid injector 2 is designed to be the fuel injector of the internal combustion engine, this configuration corresponds to a fuel injector which is uncoupled from the fluid reservoir, for example the fuel rail.

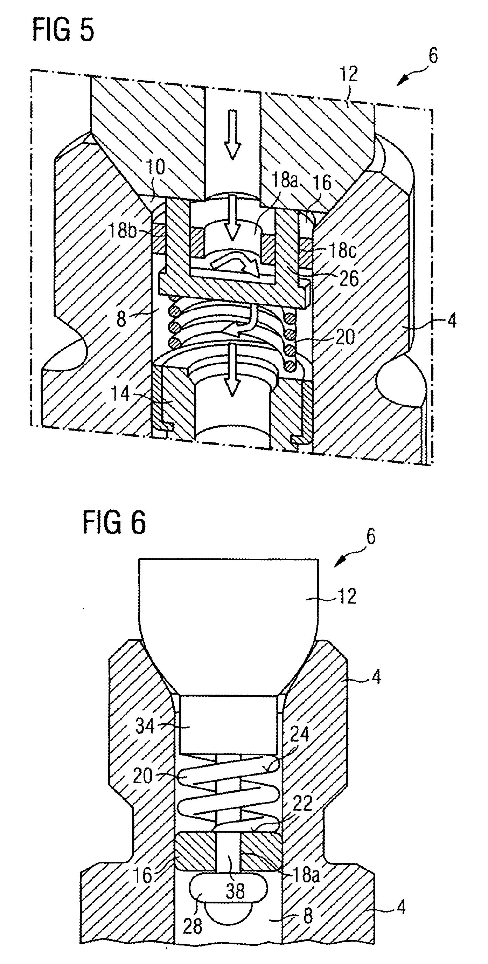

Figure 4 and Figure 5 show the first embodiment of the relief valve 6 with the fluid pipe connector 12 coupled to the fluid injector 2. When the fluid pipe connector 12 is coupled to the fluid injector 2, it presses the contact elements 34 against a pre-stressing of the spring element 20 in direction to the fluid filter 14. As a result, the closing element 28 of the piston 26 is not in contact with the sealing element 16 and a hydraulic communication at least through the recess 18a is enabled. This enables the fluid pipe connector 12 to provide the fluid injector 2 with fluid, for example with fuel.

In a preferred embodiment, the fluid inlet 10 comprises a spherical shape and the fluid pipe connector 12 comprises a conical shape in order to establish a mechanical engagement with a spherical to conical connection. It is for example also possible that the fluid inlet 10 comprises a conical shape and the fluid pipe connector 12 comprises a spherical shape in order to establish a mechanical engagement with a conical to spherical connection between the fluid inlet 10 and the fluid pipe connector 12.

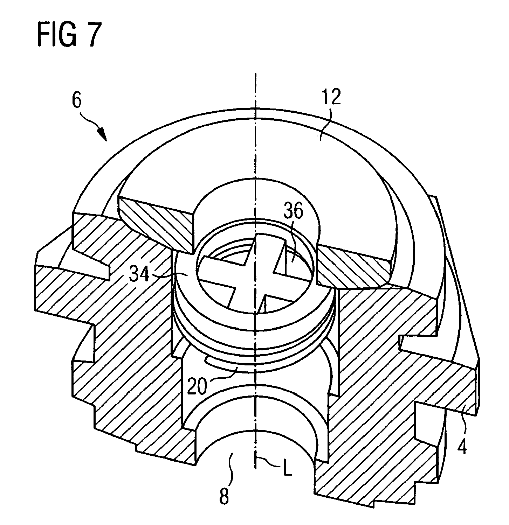

Figures 6 and 7 show a second embodiment of the relief valve 6. In both figures the relief valve 6 shown is coupled with the fluid pipe connector 12.

The second embodiment differs from the first embodiment in that the piston 26 comprises a cylindrical contact element 34 having at least one clearance 36 in order to enable a hydraulic communication in the cavity 8 through the clearance 36. The closing element 28 of the piston 26 is designed to seal the recess 18a of the sealing element 16 hydraulically in case of a mechanical connection between the closing element 28 and the sealing element 16. A piston rod 38 mechanically couples the contact element 34 with the closing element 28, extending through the recess 18a of the sealing element 16 and being arranged in parallel to the longitudinal axis L of the cavity 8.

The first axial end 22 of the spring element 20 is mechanically coupled with the sealing element 16.

The advantage of the relief valve 6 according to the first or second embodiment is that upon a mechanical connection of the fluid pipe connector 12 to the fluid injector 2 a hydraulical communication between the fluid pipe connector 12 and the cavity 8 of the fluid injector 2 is established automatically. The contrary is also true. When the fluid injector 2 is mechanically disconnected from the fluid pipe connector 12, the cavity 8 is automatically sealed hydraulically by the relief valve 6. This reduces the risk of fluid leakage through the fluid inlet 10 when the fluid injector 2 is disconnected. Especially, it reduces the risk of a contamination of, for example, a service technician uncoupling the fluid injector 2. The absence of components that might move during a fluid flow in the fluid injector 2 further reduces the risk of a contamination of the fluid with particles due to an abrasion of mechanical parts.

## Claims

1. Fluid injector having a relief valve (6), comprising
- a housing (4) having a cavity (8) with a longitudinal axis (L) and a fluid inlet (10) at an axial end of the cavity (8) being designed to receive a fluid pipe connector (12),
- a sealing element (16), being arranged in the cavity (8) such that it is fixed in relation to the housing (4), with at least one first recess (18a) enabling a hydraulic communication in the cavity (8) through this at least one first recess (18a),
- a spring element (20) being arranged in the cavity (8) with a first axial end (22) being fixed in relation to the housing (4) and a second axial end (24) being arranged movable in the cavity (8) facing the fluid inlet (10),
- a piston (26),
- - being arranged in the cavity (8) such that at least a part of the piston (26) extends into the fluid inlet (10) in order to be operated by the fluid pipe connector (12) and
- - being mechanically coupled to the second axial end (24) of the spring element (20) such that the piston (26) is pressed against the sealing element (16) hydraulically sealing the at least one first recess (18a) when the fluid pipe connector (12) is mechanically uncoupled from the fluid inlet (10) and that the piston (26) is moved against a tension of the spring element (20) unblocking the at least one first recess (18a) of the sealing element (16) when the fluid pipe connector (12) is coupled mechanically to the fluid inlet (10),
the piston (26) further comprising
- a closing element (28) with a first side (30) and an opposite second side (32) being mechanically coupled to the second axial end (24) of the spring element (20) with its first side (30) and being designed to seal the at least one first recess (18a) of the sealing element (16) hydraulically in case of a mechanical connection between the closing element (28) and the sealing element (16),
**characterized in that**
the sealing element (16) further comprises at least one second recess (18b, 18c), and **in that** the piston (26) further comprises at least one contact element (34) being in a mechanical engagement with the second side (32) of the closing element (28), extending through a respective one of the at least one second recess (18b,18c) of the sealing element (16) and at least partially into the fluid inlet (10) and being arranged in parallel to the longitudinal axis (L) of the cavity (8).

2. Fluid injector in accordance with claim 1, with the fluid inlet (10) comprising a spherical or a conical shape being designed to be in a conical/spherical or in a spherical/conical mechanical engagement with the fluid pipe connector (12).

## Patentansprüche

1. Flüssigkeitseinspritzdüse mit einem Entlastungsventil (6), umfassend
• ein Gehäuse (4), das einen Hohlraum (8) mit einer Längsachse (L) und einem Fluid-Einlass (10) an einem axialen Ende des Hohlraums (8) aufweist, konstruiert einen Fluidrohranschluss (12) aufzunehmen,
• ein Dichtungselement (16), angeordnet in dem Hohlraum (8) derart dass es in Bezug auf das Gehäuse (4) feststeht, mit mindestens einer ersten Ausnehmung (18a), welche eine hydraulische Kommunikation in dem Hohlraum (8) durch diese mindestens eine erste Ausnehmung (18a) ermöglicht,
• ein Federelement (20), angeordnet in dem Hohlraum (8), wobei ein erstes axiales Ende (22) in Bezug auf das Gehäuse (4) feststehend und ein zweites axiales Ende (24) beweglich gegenüber dem Fluid-Einlass (10) in dem Hohlraum (8) angeordnet ist,
• einen Kolben (26),
■ der in dem Hohlraum (8) derart angeordnet ist, dass mindestens ein Teil des Kolbens (26) sich in den Fluid-Einlass (10) erstreckt, um von dem Fluidrohranschluss (12) betätigt zu werden, und
■ der mechanisch mit dem zweiten axialen Ende (24) des Federelementes derart verbunden ist, dass der Kolben (26) gegen das Dichtungselement (16) gepresst wird und so die mindestens eine Ausnehmung (18a) abdichtet, wenn der Fluidrohranschluss (12) mechanisch von dem Fluid-Einlass (10) entkoppelt ist, und dass der Kolben (26) gegen eine Spannung des Federelementes (20) bewegt wird und so die mindestens eine Ausnehmung (18a) des Dichtungselementes (16) freigibt, wenn der Fluidrohranschluss (12) mechanisch mit dem Fluid-Einlass (10) gekoppelt ist,
wobei der Kolben (26) ferner umfasst
• ein Schließelement (28) mit einer ersten Seite (30) und einer entgegengesetzten zweiten Seite (32), das mit seiner ersten Seite (30) mit dem zweiten axialen Ende (24) des Federelementes (20) mechanisch gekoppelt ist und das konstruiert ist, die mindestens eine Ausnehmung (18a) des Dichtungselementes (16) im Falle einer mechanischen Verbindung zwischen dem Schließelement (28) und dem Dichtungselement (16) hydraulisch abzudichten,
• **dadurch gekennzeichnet dass**
• das Dichtungselement (16) ferner mindestens eine zweite Ausnehmung (18b, 18c) umfasst und dass
• der Kolben (26) mindestens ein Kontaktelement (34) umfasst, das in mechanischem Eingriff mit der zweiten Seite (32) des Schließelements (28) ist und sich durch eine jeweilige der mindestens einen zweiten Ausnehmung (18b, 18c) des Dichtungselements (16) und mindestens teilweise in den Fluid-Einlass (10) erstreckt und das parallel zu der Längsachse (L) des Hohlraums (8) angeordnet ist.

2. Flüssigkeitseinspritzdüse gemäß Anspruch 1, wobei der Fluid-Einlass (10) eine sphärische oder konische Form umfasst, die konstruiert ist, in einem sphärischen/konischen oder in einem sphärisch/konisch mechanischen Eingriff mit dem Fluidrohranschluss (12) zu sein.

## Revendications

1. Injecteur de fluide ayant une soupape de sûreté (6), comprenant :
- un logement (4) ayant une cavité (8) avec un axe longitudinal (L) et une entrée de fluide (10) à une extrémité axiale de la cavité (8), conçue pour recevoir un raccord de tuyau de fluide (12),
- un élément d'étanchéité (16), disposé dans la cavité (8) de sorte qu'il soit fixé par rapport au logement (4), avec au moins un premier évidement (18a) permettant une communication hydraulique dans la cavité (8) à travers ce au moins un premier évidement (18a),
- un élément à ressort (20) disposé dans la cavité (8) avec une première extrémité axiale (22) fixée par rapport au logement (4) et une seconde extrémité axiale (24) disposée mobile dans la cavité (8) en regard de l'entrée de fluide (10),
- un piston (26),
- - disposé dans la cavité (8) de sorte qu'au moins une partie du piston (26) s'étende dans l'entrée de fluide (10) pour y être activé par le raccord de tuyau de fluide (12) et
- - mécaniquement couplé à la seconde extrémité axiale (24) de l'élément à ressort (20) de sorte que le piston (26) soit comprimé contre l'élément d'étanchéité (16) scellant par voie hydraulique le au moins un premier évidement (18a) lorsque le raccord de tuyau de fluide (12) est mécaniquement désaccouplé de l'entrée de fluide (10) et que le piston (26) est déplacé contre une tension de l'élément à ressort (20), débloquant le -au moins- un premier évidement (18a) de l'élément d'étanchéité (16) lorsque le raccord de tuyau de fluide (12) est couplé mécaniquement à l'entrée de fluide (10),
le piston (26) comprenant en outre :
- un élément de fermeture (28) avec un premier côté (30) et un second côté opposé (32) mécaniquement couplé à la seconde extrémité axiale (24) de l'élément à ressort (20) par son premier côté (30) et conçu pour sceller le -au moins- un premier évidement (18a) de l'élément d'étanchéité (16) par voie hydraulique en cas de raccordement mécanique entre l'élément de fermeture (28) et l'élément d'étanchéité (16), **caractérisé en ce que**
l'élément d'étanchéité (16) comprend en outre -au moins-un second évidement (18b, 18c), et **en ce que**
le piston (26) comprend en outre -au moins- un élément de contact (34) engagé mécaniquement sur le second côté (32) de l'élément de fermeture (28), s'étendant à travers un évidement respectif du -au moins- un second évidement (18b, 18c) de l'élément d'étanchéité (16) et au moins partiellement dans l'entrée de fluide (10) et disposé parallèlement à l'axe longitudinal (L) de la cavité (8).

2. Injecteur de fluide selon la revendication 1, l'entrée de fluide (10) comprenant une forme sphérique ou conique conçue pour se trouver dans un engagement mécanique conique/sphérique ou sphérique/conique avec le raccord de tuyau de fluide (12).
